(19) Europäisches Patentamt / European Patent Office / Office européen des brevets

(11) **EP 4 056 441 B1**

(12) **EUROPEAN PATENT SPECIFICATION**

(45) Date of publication and mention
of the grant of the patent:
**06.05.2026 Bulletin 2026/19**

(21) Application number: **21162318.6**

(22) Date of filing: **12.03.2021**

(51) International Patent Classification (IPC):
*G05D 1/00* (2024.01)  *B60W 30/12* (2020.01)
*B60W 40/107* (2012.01)  *B60W 40/072* (2012.01)

(52) Cooperative Patent Classification (CPC):
**B60W 40/072; B60W 30/12; B60W 40/107;**
B60W 2520/105; B60W 2552/30; B60W 2552/53;
B60W 2554/802

(54) **BACK PROPAGATION PLANNING FOR ADAS/AD MOTION PLANNING AND CONTROL**

BACK PROPAGATIONS-BASIERTE ADAS/AD-BEWEGUNGSPLANUNG UND -STEUERUNG

PLANIFICATION ET CONTRÔLE DE MOUVEMENT ADAS/AD BASÉE BACK PROPAGATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.09.2022 Bulletin 2022/37**

(73) Proprietor: **Aptiv Technologies AG**
**8200 Schaffhausen (CH)**

(72) Inventor: **SVENSSON, Viktor**
**431 30 Mölndal (SE)**

(74) Representative: **Manitz Finsterwald**
**Patent- und Rechtsanwaltspartnerschaft mbB**
**Martin-Greif-Straße 1**
**80336 München (DE)**

(56) References cited:
**KR-A- 20160 050 441     US-A1- 2018 356 819**

- ZHANG YAJIA ET AL: "Optimal Trajectory
Generation for Autonomous Vehicles Under
Centripetal Acceleration Constraints for In-lane
Driving Scenarios", 2019 IEEE INTELLIGENT
TRANSPORTATION SYSTEMS CONFERENCE
(ITSC), IEEE, 27 October 2019 (2019-10-27),
pages 3619 - 3626, XP033668283, DOI: 10.1109/
ITSC.2019.8916917
- GUO LIE ET AL: "Multi-Objective Adaptive Cruise
Control Strategy Based on Variable Time
Headway", 2018 IEEE INTELLIGENT VEHICLES
SYMPOSIUM (IV), IEEE, 26 June 2018
(2018-06-26), pages 203 - 208, XP033423265, DOI:
10.1109/IVS.2018.8500365

## Description

FIELD

The present invention relates to a method and a device for scheduling a trajectory of a vehicle.

BACKGROUND

Advanced driver assistance systems (ADAS) support drivers in order to drive a vehicle more safely and comfortably. These systems are provided e.g. for keeping the vehicle within lane boundaries and to avoid getting too close to other objects by steering and/or braking/accelerating. Such safety functionalities are usually realized separately by individual functions of an advanced driver assistance system which are optimized for a specific purpose.

An adaptive cruise control, for example, attempts to maintain a speed set by a driver of the vehicle or to keep a certain distance to a target vehicle in front of a host vehicle in which the adaptive cruise control is installed. Therefore, the adaptive cruise control is effective only to control the speed of the vehicle in a longitudinal direction, and the driver has to control a steering wheel of the vehicle, i.e. any lateral movement.

On the other hand, a lane centering and/or lane keeping assistance is provided for lateral control and keeps a vehicle in a lane by steering the wheels in order to compensate any undesired lateral deviations with respect e.g. to a distance from lane markers. However, if a lane keeping assistance is activated, there is no speed control for the vehicle. Also, the steering is controlled by the lane keeping assistance, a driver has still to control a steering wheel and to take over control if necessary.

Furthermore, there are methods and devices for planning or scheduling a trajectory of a vehicle which are known in the related art. The scheduled trajectory of the vehicle may be used as an input for further assistance systems, e.g. in order to coordinate the adaptive cruise control for the longitudinal direction and the lane centering and/or lane keeping assistance for the lateral movement. However, these methods and devices for trajectory planning may be computationally expensive, e.g. if they are implemented based on a model predictive control.

Y. Zhang et al.: "Optimal Trajectory Generation for Autonomous Vehicles Under Centripetal Acceleration Constraints for In-lane Driving Scenarios", 2019 IEEE Intelligent Transportation Systems Conference (ITSC), IEEE, October 27, 2019, pages 3619 to 3626, discloses a method and a device for generating an optimized trajectory for a vehicle. A curvature derivative and a longitudinal acceleration change rate or jerk are determined and used, amongst others, to estimate the optimized trajectory for the vehicle based on an objective function or cost function.

KR 2016 0050441 A discloses a prediction of a longitudinal jerk as a function of forward traffic.

Accordingly, there is a need to have a method and a device for scheduling a trajectory of a vehicle requiring a low computational effort while providing a flexible configuration.

SUMMARY

The present invention provides a computer implemented method, a device and a non-transitory computer readable medium according to the independent claims. Embodiments are given in the subclaims, the description and the drawings.

In one aspect, the present invention is directed at a computer implemented method for scheduling a trajectory of a vehicle. According to the method, kinematic parameters of the vehicle are detected by using at least one vehicle state sensor, and environmental parameters of the vehicle are detected by using at least one environment sensor. Via a processing unit, a curvature rate and a longitudinal jerk are estimated based on respective cost functions depending from the kinematic parameters and the environmental parameters of the vehicle. A scheduled trajectory of the vehicle is estimated based on the curvature rate and the longitudinal jerk via the processing unit.

The at least one vehicle state sensor is able to provide the dynamic and static states of the vehicle, e.g. the current position, the longitudinal and lateral velocity and therefore the heading of the vehicle, the longitudinal acceleration and the lateral acceleration of the vehicle etc. Hence, the vehicle state sensors may include a global positioning system (GPS), a speedometer, an accelerometer, for example.

The at least one environment sensor may be able to determine parameters and/or properties of the road or lane on which the vehicle is currently driving and parameters and/or properties of objects in the environment of the vehicle, e.g. other vehicles, pedestrians etc. For scheduling the trajectory of the vehicle, the at least one environment sensor may determine the curvature and the width of the lane, for example. In detail, the at least one environment sensor may include a camera, a radar system and/or a Lidar system.

Estimating the scheduled trajectory relies on the curvature rate for the lateral direction and on the longitudinal jerk for the longitudinal direction which is tangent to the direction in which the vehicle is currently driving. It turned out that the curvature rate and the longitudinal jerk are suitable control values for scheduling a reliable trajectory of the vehicle.

Furthermore, estimating the curvature rate and the longitudinal jerk based on respective cost functions requires quite a low computational effort, e.g. in comparison to methods and devices which rely on a model predictive control.

According to an embodiment, the respective cost functions may be smoothed after estimating the scheduled trajectory. A revised curvature rate and a revised longitudinal jerk may be estimated based on the smoothed cost functions, and a revised scheduled trajectory may be estimated based on the revise curvature rate and the revised longitudinal jerk.

In detail, each value of the respective cost functions may depend on a planning index which corresponds to a time increment with respect to the scheduled trajectory, i.e. "along" the scheduled trajectory starting from the vehicle. The respective cost functions may be smoothed starting from the last planning index up to the first planning index, whereas the revised scheduled trajectory may be estimated thereafter starting from the first planning index up to the last planning index. In other words, for the cost functions a "back propagation" may be performed due to the smoothing starting from the end of the scheduled trajectory. In contrast, the revised scheduled trajectory may be estimated in the "forward" direction in the same manner as the original trajectory.

Due to the smoothing of the cost functions via back propagation, sudden changes in the revised curvature rate and the revised longitudinal jerk may be prevented which might be caused by discontinuities in the acquired input data, i.e. in the kinematic and environmental parameters, e.g. due to a change of a speed limit or when the vehicle changes the lane etc. Hence, the revised scheduled trajectory may be smoothed as well when smoothing the cost functions which may lead to a smooth behavior of the vehicle when driving along the revised scheduled trajectory.

Furthermore, cost related to the lateral dynamics of the vehicle may be estimated based on a subset of the kinematic parameters and of the environmental parameters of the vehicle, and the cost related to the lateral dynamics may be transformed in order to determine the curvature rate cost function, the lateral offset cost function, the heading cost function and the curvature cost function. Similarly, cost related to the longitudinal dynamics of the vehicle may be estimated based on a further subset of the kinematic parameters and of the environmental parameters of the vehicle, and the cost related to the longitudinal dynamics may be transformed in order to determine the longitudinal jerk cost function, the range cost function, the range rate cost function and the acceleration cost function. Hence, the flexibility when defining the cost function may be enhanced since the respective subset of the kinematic parameters and of the environmental parameters of the vehicle may be individually adapted to the configuration of the vehicle.

According to a further embodiment, estimating the scheduled trajectory of the vehicle may further be based on a reference curvature which may be determined based on a course of a lane derived from the environmental parameters. The reference curvature may be determined between a minimum curvature and a maximum curvature which may be permissible for the vehicle without leaving the lane. Incorporating the reference curvature when estimating the scheduled trajectory of the vehicle may improve the reliability of the final scheduled trajectory on which the further assistance systems of the vehicle may rely.

In another aspect, the present invention is directed at a device for scheduling a trajectory of a vehicle. The device comprises at least one vehicle state sensor configured to detect kinematic parameters of the vehicle, at least one environment sensor configured to detect environmental parameters of the vehicle, and a processing unit. The processing unit is configured to estimate a curvature rate and a longitudinal jerk based on respective cost functions depending from the kinematic parameters and the environmental parameters of the vehicle, and to estimate a scheduled trajectory of the vehicle based on the curvature rate and the longitudinal jerk.

As used herein, the terms processing device, processing unit and module may refer to, be part of, or include an Application Specific Integrated Circuit (ASIC); an electronic circuit; a combinational logic circuit; a field programmable gate array (FPGA); a processor (shared, dedicated, or group) that executes code; other suitable components that provide the described functionality; or a combination of some or all of the above, such as in a system-on-chip. The term module may include memory (shared, dedicated, or group) that stores code executed by the processor. In summary, the device according to the invention includes at least one vehicle state sensor, at least one environment sensor and a processing unit which are configured to perform the steps as described above for the corresponding method. Therefore, the benefits, the advantages and the disclosure as described above for the method are also valid for the device according to the invention.

In another aspect, the present invention is directed at a non-transitory computer readable medium comprising instructions for carrying out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

DRAWINGS

Exemplary embodiments and functions of the present invention are described herein in conjunction with the following drawings, showing schematically:

Fig. 1    depicts an overview of a device according to the invention,
Fig. 2    depicts a flow diagram of a method according to the invention,
Fig. 3    depicts the generation of a curvature reference, and
Fig. 4    depicts the effect of smoothing cost functions on the longitudinal part of estimating a scheduled trajectory.

DETAILED DESCRIPTION

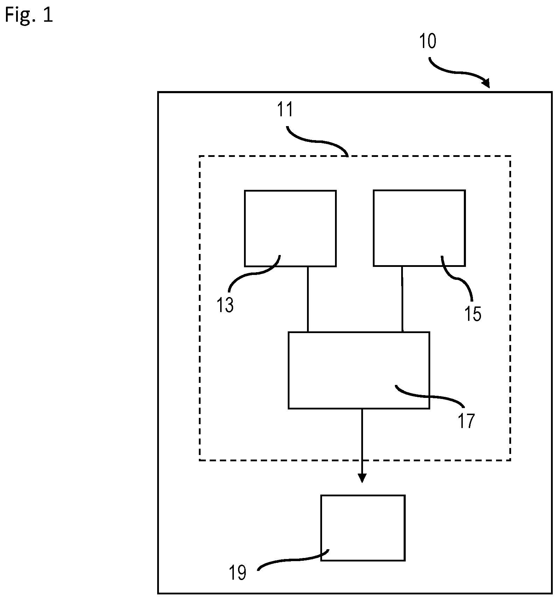

Fig. 1 depicts a schematic overview of a vehicle 10 including a device 11 for scheduling a trajectory of the vehicle 10. The device 11 includes at least one vehicle state sensor 13, at least one environment sensor 15 and a processing unit 17. The vehicle state sensor 13 and the environment sensor 15 are configured to provide data for the processing unit 17. The vehicle state sensor 13 includes a speedometer, an accelerometer and/or a device for determining the current position of the vehicle 10, e.g. a GPS-system. Hence, the vehicle state sensor 13 detects kinematic parameters of the vehicle 10. The environment sensor 15 includes a camera for monitoring the environment of the vehicle 10 and for detecting environmental parameters of the vehicle 10. Additionally or alternatively, the at least one environment sensor 15 may include a radar system and/or a Lidar system.

The processing unit 17 is configured to estimate the scheduled trajectory of the vehicle 10 based on the data provided by the vehicle state sensor 13 and environment sensor 15, as will be described in detail below. The scheduled trajectory is denoted by 19 in Fig. 1 and is the final output of the processing unit 17 and therefore of the entire device 11.

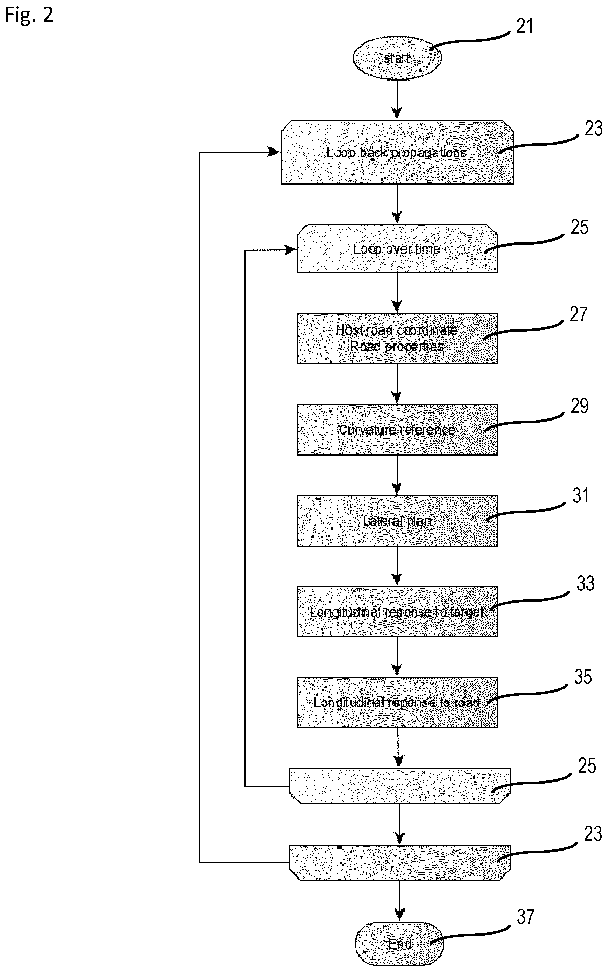

Fig. 2 schematically depicts a flow diagram of a method for scheduling the trajectory 19 of the vehicle 10. The method as shown in Fig. 2 is performed via the processing unit 17 (see Fig. 1). The method starts at 21 and enters a first loop 23 of back propagation which will be explained in detail below, and an inner loop 25 over the time. The scheduled trajectory 19 which is output by the processing unit 15 (see Fig. 1) is provided as depending on a planning index which corresponds to the elapsed time of the scheduled trajectory. In other words, each planning index refers to a time increment for the trajectory planning. Therefore, the loop 25 over time is executed once for each planning index or time increment until the entire scheduled trajectory 19 is estimated.

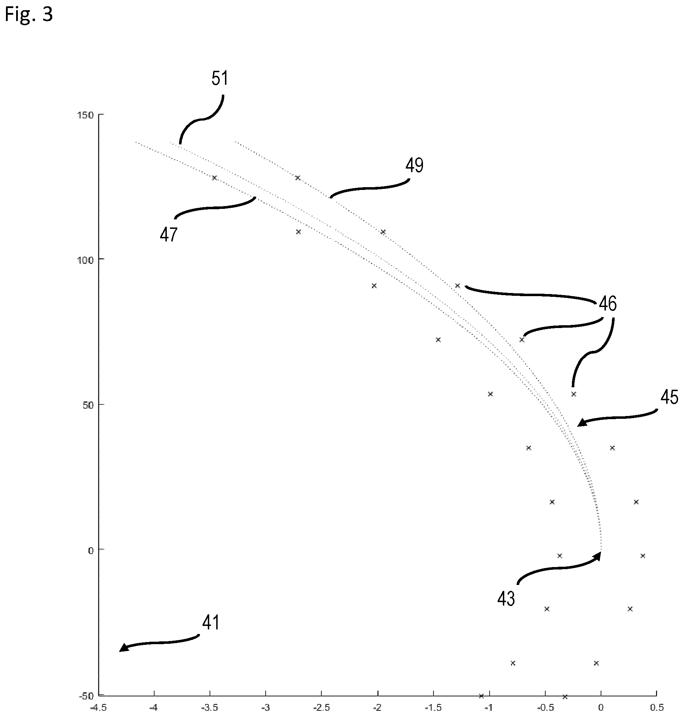

Within the loop 25 over time, a position of the vehicle 10 (which is also denoted as host vehicle) is determined in road coordinates. The road coordinates are provided as Frenet coordinates, an example of which is shown in Fig. 3. A road or Frenet coordinate system 41 includes an origin which represents the current position 43 of the vehicle or host vehicle 10. Furthermore, a lane 45 is depicted on which the vehicle 10 is currently driving and which includes lane markers 46.

In detail, the lane 45 is represented by sampled segments each of which includes information about the position and the heading of the vehicle and about curvature and width of the lane 45. That is, kinematic parameters and environmental parameters of the vehicle are determined at 27 using the vehicle state sensor 13 and the environment sensor 15 (see Fig. 1).

At 29, a curvature reference is generated for which an example is shown in Fig. 3. A minimum curvature 47 and a maximum curvature 49 are calculated such that the vehicle 10 is able to proceed at a constant curvature of the corresponding trajectory without leaving the lane 45. As can be seen in Fig. 3, the minimum curvature 47 and the maximum curvature 49 reach the lane markers 46 in a region at the end of the trajectory 19 which is to be scheduled.

A final or reference curvature 51 is determined in the region between the minimum curvature 47 and the maximum curvature 49, wherein the final curvature 51 is biased towards the minimum curvature 47 in left curves and towards the maximum curvature 49 in right curves.

Generally, the scheduled trajectory 19 is restricted to a certain horizon or range which is defined by the instrumental range of the environmental sensor 15. When generating the reference curvature 51, it may not be possible to pass all the sampled lane markers 46 with a constant curvature. In this case, the most limiting lane marker 46 will be used for generating the reference curvature 51.

At 31, the lateral part of the trajectory planning is estimated, whereas at 33 and 35 the longitudinal part of the trajectory planning is estimated. The longitudinal part is split into a longitudinal response to a target object which is determined as 33 and a longitudinal response to the road which is determined at 35.

In detail, costs for lateral dynamics are determined based on a subset of the kinematic parameters and the environmental parameters which includes a lateral offset, a lateral velocity, a curvature, a yaw rate, a lateral acceleration and a lateral jerk. Similarly, costs for longitudinal dynamics are determined based on a further subset of the kinematic parameters and the environmental parameters which includes a range to an object, a speed, a constant velocity time to collision, a longitudinal acceleration and a longitudinal jerk.

These costs are therefore defined based on the parameters mentioned above and are further transformed into so-called state costs. These state costs include a lateral offset cost function, a heading cost function (wherein the heading is defined relative to the road), a curvature cost function and a curvature rate cost function for the lateral part of the trajectory planning, and the state costs include a range cost function, a range rate cost function, an acceleration cost function and a jerk cost function for the longitudinal part of the trajectory planning.

It turned out that the curvature rate and the jerk as well as their corresponding cost functions are the most suitable control values or entities for controlling the vehicle 10 and therefore for scheduling the trajectory 19.

**In** order to determine these control values, an equilibrium contribution or equilibrium cost for the lateral dynamics can be formulated as:

$$C_{o,i} + C_{h,i} + C_{c,i} + C_{k,i} = 0 \qquad (1)$$

wherein $C_{o,i}$ is the lateral offset cost function, $C_{h,i}$ is the heading cost function, $C_{c,i}$ is the curvature cost function, and $C_{k,i}$ is the curvature rate cost function, and wherein all cost functions depend on the planning index i which indicates the number of the respective time increment. Hence, the planning index i corresponds to the elapsed time "along" the trajectory to be scheduled. Since the curvature rate is used as control value, it can be reformulated as:

$$C_{k,eq,i} = -(C_{o,i} + C_{h,i} + C_{c,i}) \qquad (2)$$

which is denoted as the equilibrium cost. This is the formulation that ensures an adequate response to an error in the kinematic states of the vehicle. This does, however, not ensure stability, so a second term or "stabilizing contribution" is defined for the final curvature rate as follows:

$$K_{stab,i} = \frac{C_{k,eq,i} - (\frac{d}{dt}C_{o,i} + \frac{d}{dt}C_{h,i})}{dC_{c,i}/dC_i} \qquad (3)$$

wherein $\dfrac{dC_{c,i}}{dC_i}$ is a change of curvature cost per curvature. This formulation aims to decrease $C_{k,eq,i}$ with $-C_{k,eq,i}$ per second. The final curvature rate being used as control value is the sum of the two contributions based on the formulas (2) and (3) as described above:

$$K_{tot,i} = K_{stab,i} + K_{eq,i} , wherein\ K_{eq,i} = f_k(C_{k,eq,i}) \qquad (4)$$

and wherein $f_k$ is a gain function for curvature rate.

In a similar manner the equilibrium cost for longitudinal jerk is defined as

$$C_{j,eq,i} = -(C_{r,i} + C_{rr,i} + C_{a,i}) \qquad (5)$$

wherein $C_{j,i}$ is the jerk cost function, $C_{r,i}$ is the range cost function, $C_{rr,i}$ is the range rate cost function and $C_{a,i}$ is the acceleration cost function. Corresponding to formula (3), a term for ensuring stability is defined for longitudinal control as follows:

$$j_{stab,i} = \frac{C_{j,eq,i} - (\frac{d}{dt}C_{r,i} + \frac{d}{dt}C_{rr,i})}{dC_{a,i}/dA_i} \qquad (6)$$

The final longitudinal jerk is therefore defined as:

$$j_{tot,i} = j_{stab,i} + j_{eq,i}\ wherein\ j_{eq,i} = f_j(C_{j,eq,i}) \quad (7)$$

and wherein $f_j$ is a gain function for longitudinal jerk.

The only difference between the longitudinal response to a target object and the longitudinal response to the road (see also steps 33 and 35 in Fig. 2) is that the latter does not consider a range state, and the range rate is either defined by a speed limit related to the road or the speed that is limiting the lateral acceleration (whichever is lower). The scheduled trajectory 19 will be based on the lower value of the longitudinal response to a target object and the longitudinal response to the road for each planning index, i.e. the minimum of the two response values will be used as the final longitudinal jerk.

Once the trajectory 19 has been scheduled for all planning indices within the loop 25 over time using the cost functions as defined above, smoothing is applied to the equilibrium cost functions according to the following formulation, i.e. laterally:

$$C_{k,eq,i} = \alpha \cdot 0.5 \cdot C_{k,eq,i-1} + (1 - \alpha)C_{k,eq,i} + \alpha \cdot 0.5 \cdot C_{k,eq,i+1} \qquad (8)$$

and similarly longitudinally:

$$C_{j,eq,i} = \alpha \cdot 0.5 \cdot C_{j,eq,i-1} + (1 - \alpha)C_{j,eq,i} + \alpha \cdot 0.5 \cdot C_{j,eq,i+1} \qquad (9)$$

wherein $\alpha$ is a smoothing constant.

The equilibrium cost functions are smoothed starting from the last planning index up to the first planning index, and thereafter the scheduled trajectory 19 is estimated again as a revised scheduled trajectory 19 starting from the first planning index up to the last planning index, i.e. by repeating the loops 25 over time (see Fig. 2) for all planning indices. Therefore, the smoothing of the cost functions in "backward" direction starting from the last planning index represents the loop 23 for back propagation which is shown in Fig. 2. In addition, the stability contributions are also calculated again according to formula (3) and formula (6) for the curvatures rate and for the longitudinal jerk, respectively, after the smoothing of the equilibrium cost functions is performed in the loop 23 for the back propagation.

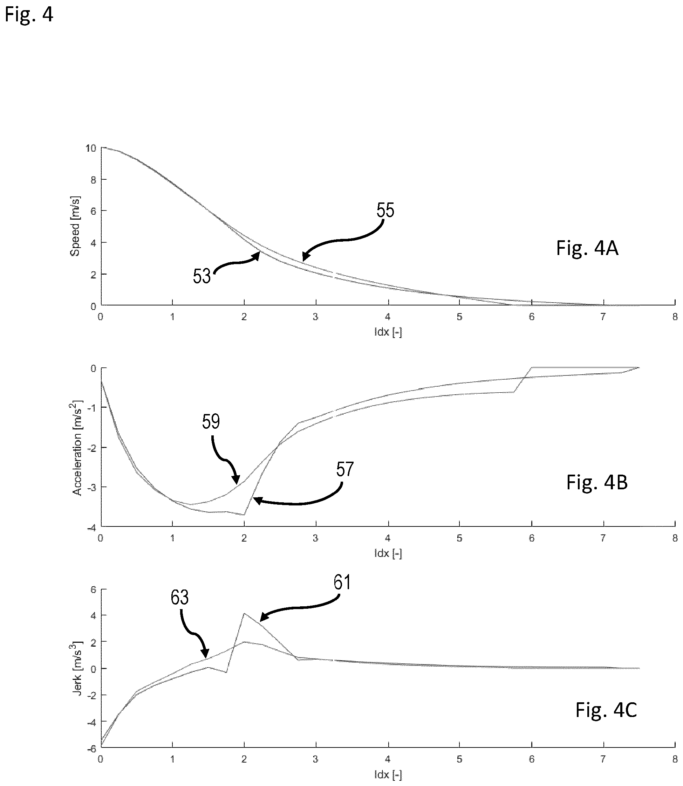

Fig. 4 depicts the effect of smoothing the equilibrium cost functions on the longitudinal dynamics of the vehicle 10. In detail, the speed in m/s, the acceleration in $m/s^2$ and the jerk in $m/s^3$ are represented by the y-axis and depicted over the planning index (corresponding to time increments) which is represented by the x-axis. The speed (Fig. 4A), the acceleration (Fig. 4B) and the jerk (Fig. 4C) of the vehicle 10 are represented by different curves for a scenario in which the vehicle 10 stops behind a moderately breaking other vehicle. As is known from elementary kinematics, the acceleration is the derivative of the speed with respect to time and the jerk is the first derivative of the acceleration and the second derivative of the speed with respect to time.

The speed, the acceleration and the jerk of the vehicle 10 before smoothing the equilibrium cost functions are represented by the curves 53, 57 and 61. In addition, the curves 55, 59 and 63 represent the speed, the acceleration and the jerk of the host vehicle 10 after smoothing the equilibrium cost functions according to formula (8) and formula (9), respectively. As can be seen, the longitudinal jerk which is used as control value shows some abrupt discontinuities in the curve 61 which are removed due to the smoothing of the cost functions in curve 63.

Therefore, the course of the scheduled trajectory 19 which is output at the end 37 (see Fig. 2) of the method will be smoothed as well. This will lead to a smoother driving behavior of the vehicle 10 when it follows the scheduled trajectory 19. Since the device 11 and the method as shown in Figs. 1 and 2, respectively, are based on the framework of cost functions as explained above, a moderate computational effort is required for scheduling the trajectory 19 which is much lower than the computational effort required e.g. for a model predictive control.

Reference numeral list

| | |
|---|---|
| 10 | vehicle |
| 11 | device |
| 13 | vehicle state sensor |
| 15 | environmental sensor |
| 17 | processing unit |
| 19 | scheduled trajectory |
| 21 | start |
| 23 | loop for back propagation |
| 25 | loop over time |
| 27 | determining parameters of the vehicle and of the road |
| 29 | generating curvature reference |
| 31 | lateral planning |
| 33 | longitudinal response to target object |
| 35 | longitudinal response to the road |
| 37 | end |
| 41 | coordinate system |
| 43 | position of the vehicle |
| 45 | lane |
| 46 | lane markers |
| 47 | minimum curvature |
| 49 | maximum curvature |

51    final or reference curvature
53    speed without smoothing cost functions
55    speed based on smoothed cost functions
57    acceleration without smoothing cost functions
59    acceleration based on smoothed cost functions
61    jerk without smoothing cost functions
63    jerk based on smoothed cost functions

**Claims**

1. Computer implemented method for scheduling a trajectory of a vehicle (10), the method comprising:

   detecting kinematic parameters of the vehicle (10) by using at least one vehicle state sensor (13),
   detecting environmental parameters of the vehicle (10) by using at least one environment sensor (15),
   estimating, via a processing unit (17), a curvature rate and a longitudinal jerk based on respective cost functions depending from the kinematic parameters and the environmental parameters of the vehicle (10), and
   estimating, via the processing unit (17), a scheduled trajectory (19) of the vehicle (10) based on the curvature rate and the longitudinal jerk wherein
   the estimated curvature rate and the estimated longitudinal jerk each comprise a stabilizing contribution and an equilibrium contribution which depend on the respective cost functions,
   the estimated curvature rate $K_i$ is given by:

$$K_i = K_{stab,i} + K_{eq,i}, wherein\ K_{eq,i} = f_k(C_{k,eq,i})$$

   wherein $K_{stab,i}$ is the stabilizing contribution of the curvature rate, $K_{eq,i}$ is the equilibrium contribution of the curvature rate, $f_k$ is a gain function for the curvature rate, and $C_{k,eq,i}$ denotes an equilibrium cost for the curvature rate, defined as $C_{k,eq,i} = -(C_{o,i} + C_{h,i} + C_{c,i})$, and
   wherein $K_{stab,i}$ is defined as

$$K_{stab,i} = \frac{C_{k,eq,i} - (\frac{d}{dt}C_{o,i} + \frac{d}{dt}C_{h,i})}{dC_{c,i}/dC_i}$$

   wherein $C_{o,i}$ is a lateral offset cost function, $C_{h,i}$ is a heading cost function, $C_{c,i}$ is a curvature cost function, and $dC_{c,i}/dC_i$ is a change of curvature cost per curvature, the estimated longitudinal jerk $j_i$ is given by:

$$j_i = j_{stab,i} + j_{eq,i}\ wherein\ j_{eq,i} = f_j(C_{j,eq,i})$$

   wherein $j_{stab,i}$ is the stabilizing contribution of the longitudinal jerk, $j_{eq,i}$ is the equilibrium contribution of the longitudinal jerk, $f_j$ is a gain function for longitudinal jerk, and $C_{j,eq,i}$ denotes an equilibrium cost for the longitudinal jerk, defined as $C_{j,eq,i} = -(C_{r,i} + C_{rr,i} + C_{a,i})$, and
   wherein $j_{stab,i}$ is defined as

$$j_{stab,i} = \frac{C_{j,eq,i} - (\frac{d}{dt}C_{r,i} + \frac{d}{dt}C_{rr,i})}{dC_{a,i}/dA_i}$$

   wherein $C_{r,i}$ is a range cost function, $C_{rr,i}$ is a range rate cost function, $C_{a,i}$ is an acceleration cost function, and $dC_{a,i}/dA_i$ is a change of acceleration cost per acceleration, and
   i indicates a number of a respective time increment.

2. Method according to claim 1, wherein

the respective equilibrium cost functions are smoothed with respect to the time increment after estimating the scheduled trajectory (19),
a revised curvature rate and a revised longitudinal jerk are estimated based on the smoothed equilibrium cost functions, and
a revised scheduled trajectory (19) is estimated based on the revised curvature rate and the revised longitudinal jerk.

3. Method according to any one of claims 1 to 2, wherein

cost related to lateral dynamics of the vehicle (10) is estimated based on a subset of the kinematic parameters and of the environmental parameters of the vehicle (10), and
the cost related to lateral dynamics is transformed in order to determine the curvature rate cost function, the lateral offset cost function, the heading cost function, and the curvature cost function.

4. Method according to anyone of claims 1 to 3, wherein

cost related to longitudinal dynamics of the vehicle (10) is estimated based on a subset of the kinematic parameters and of the environmental parameters of the vehicle (10),
the cost related to longitudinal dynamics is transformed in order to determine the longitudinal jerk cost function, the range cost function, the range rate cost function, and the acceleration cost function.

5. Method according to anyone of claims 1 to 4, wherein
estimating the scheduled trajectory (19) of the vehicle (10) is further based on a reference curvature (51) which is determined based a course of a lane (45) derived from the environmental parameters.

6. Device (11) for scheduling a trajectory of a vehicle (10), the device (11) comprising:

at least one vehicle state sensor (13) configured to detect kinematic parameters of the vehicle,
at least one environment sensor (15) configured to detect environmental parameters of the vehicle, and
a processing unit (17) configured to

estimate a curvature rate and a longitudinal jerk based on respective cost functions depending from the kinematic parameters and the environmental parameters of the vehicle (10), and
estimate a scheduled trajectory (19) of the vehicle (10) based on the curvature rate and the longitudinal jerk

wherein

the estimated curvature rate and the estimated longitudinal jerk each comprise a stabilizing contribution and an equilibrium contribution which depend on the respective cost functions,
the estimated curvature rate $K_i$ is given by:

$$K_i = K_{stab,i} + K_{eq,i}, wherein\ K_{eq,i} = f_k(C_{k,eq,i})$$

wherein $K_{stab,i}$ is the stabilizing contribution of the curvature rate, $K_{eq,i}$ is the equilibrium contribution of the curvature rate, $f_k$ is a gain function for the curvature rate, and $C_{k,eq,i}$ denotes an equilibrium cost for the curvature rate, defined as $C_{k,eq,i} = -(C_{o,i} + C_{h,i} + C_{c,i})$, and
wherein $K_{stab,i}$ is defined as

$$K_{stab,i} = \frac{C_{k,eq,i} - (\frac{d}{dt}C_{o,i} + \frac{d}{dt}C_{h,i})}{dC_{c,i}\big/dC_i}$$

wherein $C_{o,i}$ is a lateral offset cost function, $C_{h,i}$ is a heading cost function, $C_{c,i}$ is a curvature cost function, and $dC_{c,i}\big/dC_i$ is a change of curvature cost per curvature,
the estimated longitudinal jerk $j_i$ is given by:

$$j_i = j_{stab,i} + j_{eq,i} \ wherein \ j_{eq,i} = f_j(C_{j,eq,i})$$

wherein $j_{stab,i}$ is the stabilizing contribution of the longitudinal jerk, $j_{eq,i}$ is the equilibrium contribution of the longitudinal jerk, $f_j$ is a gain function for longitudinal jerk, and $C_{j,eq,i}$ denotes an equilibrium cost for the longitudinal jerk, defined as $C_{j,eq,i} = -(C_{r,i} + C_{rr,i} + C_{a,i})$, and
wherein $j_{stab,i}$ is defined as

$$j_{stab,i} = \frac{C_{j,eq,i} - (\frac{d}{dt}C_{r,i} + \frac{d}{dt}C_{rr,i})}{dC_{a,i}\big/dA_i}$$

wherein $C_{r,i}$ is the range cost function, $C_{rr,i}$ is the range rate cost function, $C_{a,i}$ is the acceleration cost function, and $dC_{a,i}\big/dA_i$ is a change of acceleration cost per acceleration, and

i indicates a number of a respective time increment.

7. Non-transitory computer readable medium comprising instructions for carrying out the computer implemented method of at least one of claims 1 to 5.

**Patentansprüche**

1. Computerimplementiertes Verfahren zum Planen einer Trajektorie eines Fahrzeugs (10), wobei das Verfahren umfasst, dass:

kinematische Parameter des Fahrzeugs (10) unter Verwendung mindestens eines Fahrzeugzustandssensors (13) detektiert werden,
Umgebungsparameter des Fahrzeugs (10) unter Verwendung mindestens eines Umgebungssensors (15) detektiert werden,
mittels einer Verarbeitungseinheit (17) eine Krümmungsrate und ein Längsruck basierend auf jeweiligen Kostenfunktionen geschätzt werden, die von den kinematischen Parametern und den Umgebungsparametern des Fahrzeugs (10) abhängen, und
mittels der Verarbeitungseinheit (17) eine geplante Trajektorie (19) des Fahrzeugs (10) basierend auf der Krümmungsrate und dem Längsruck geschätzt wird,

wobei

die geschätzte Krümmungsrate und der geschätzte Längsruck jeweils einen Stabilisierungsbeitrag und einen Gleichgewichtsbeitrag umfassen, die von den jeweiligen Kostenfunktionen abhängen,
die geschätzte Krümmungsrate $K_i$ gegeben ist durch:

$$K_i = K_{stab,i} + K_{eq,i} \ , wobei \ K_{eq,i} = f_k(C_{k,eq,i})$$

wobei $K_{stab,i}$ der Stabilisierungsbeitrag der Krümmungsrate ist, $K_{eq,i}$ der Gleichgewichtsbeitrag der Krümmungsrate ist, $f_k$ eine Verstärkungsfunktion für die Krümmungsrate ist und $C_{k,eq,i}$ Gleichgewichtskosten für die Krümmungsrate bezeichnet, die als $C_{k,eq,i} = -(C_{o,i} + C_{h,i} + C_{c,i})$ definiert sind, und
wobei $K_{stab,i}$ definiert ist als

$$K_{stab,i} = \frac{C_{k,eq,i} - (\frac{d}{dt}C_{o,i} + \frac{d}{dt}C_{h,i})}{dC_{c,i}\big/dC_i}$$

wobei $C_{o,i}$ eine Queroffset-Kostenfunktion ist, $C_{h,i}$ eine Vorwärts-Kostenfunktion ist, $C_{c,i}$ eine Krümmungs-

**EP 4 056 441 B1**

Kostenfunktion ist und $\dfrac{dC_{c,i}}{dC_i}$ eine Änderung von Krümmungskosten pro Krümmung ist,

der geschätzte Längsruck $j_i$ gegeben ist durch:

$$j_i = j_{stab,i} + j_{eq,i} \ \ wobei \ j_{eq,i} = f_j(C_{j,eq,i})$$

wobei $j_{stab,i}$ der Stabilisierungsbeitrag des Längsrucks ist, $j_{eq,i}$ der Gleichgewichtsbeitrag des Längsrucks ist, f eine Verstärkungsfunktion für den Längsruck ist und $C_{j,eq,i}$ Gleichgewichtskosten für den Längsruck bezeichnet, die als $C_{j,eq,i}$ = -($C_{r,i}$ + $C_{rr,i}$ + $C_{a,i}$) definiert sind, und
wobei $j_{stab,i}$ definiert ist als

$$j_{stab,i} = \frac{C_{j,eq,i} - (\frac{d}{dt}C_{r,i} + \frac{d}{dt}C_{rr,i})}{dC_{a,i}/dA_i}$$

wobei $C_{r,i}$ eine Entfernungs-Kostenfunktion ist, $C_{rr,i}$ eine Entfernungsraten-Kostenfunktion ist, $C_{a,i}$ eine Be-

schleunigungs-Kostenfunktion ist und $\dfrac{dC_{a,i}}{dA_i}$ eine Änderung von Beschleunigungskosten pro Beschleunigung ist und
$i$ eine Nummer eines jeweiligen Zeitinkrements ist.

2. Verfahren nach Anspruch 1, wobei

   die jeweiligen Gleichgewichts-Kostenfunktionen bezogen auf das Zeitinkrement nach dem Schätzen der geplanten Trajektorie (19) geglättet werden,
   eine revidierte Krümmungsrate und ein revidierter Längsruck basierend auf den geglätteten Gleichgewichts-Kostenfunktionen geschätzt werden und
   eine revidierte geplante Trajektorie (19) basierend auf der revidierten Krümmungsrate und dem revidierten Längsruck geschätzt wird.

3. Verfahren nach Anspruch 1 oder 2, wobei

   Kosten, die auf eine Querdynamik des Fahrzeugs (10) bezogen sind, basierend auf einer Teilmenge der kinematischen Parameter und der Umgebungsparameter des Fahrzeugs (10) geschätzt werden und
   die Kosten, die auf die Querdynamik bezogen sind, transformiert werden, um die Krümmungsraten-Kostenfunktion, die Queroffset-Kostenfunktion, die Vorwärts-Kostenfunktion und die Krümmungs-Kostenfunktion zu ermitteln.

4. Verfahren nach einem der Ansprüche 1 bis 3, wobei

   Kosten, die auf eine Längsdynamik des Fahrzeugs (10) bezogen sind, basierend auf einer Teilmenge der kinematischen Parameter und der Umgebungsparameter des Fahrzeugs (10) geschätzt werden,
   die Kosten, die auf die Längsdynamik bezogen sind, transformiert werden, um die Längsruck-Kostenfunktion, die Entfernungs-Kostenfunktion, die Entfernungsraten-Kostenfunktion und die Beschleunigungs-Kostenfunktion zu ermitteln.

5. Verfahren nach einem der Ansprüche 1 bis 4, wobei
   das Schätzen der geplanten Trajektorie (19) des Fahrzeugs (10) ferner auf einer Referenzkrümmung (51) basiert, die basierend auf einem Verlauf einer Fahrbahn (45) ermittelt wird, welche von den Umgebungsparametern abgeleitet wird.

6. Vorrichtung (11) zum Planen einer Trajektorie eines Fahrzeugs (10), wobei die Vorrichtung (11) umfasst:

   mindestens einen Fahrzeugzustandssensor (13), der ausgebildet ist, kinematische Parameter des Fahrzeugs zu detektieren,

mindestens einen Umgebungssensor (15), der ausgebildet ist, Umgebungsparameter des Fahrzeugs zu detektieren, und

eine Verarbeitungseinheit (17), die ausgebildet ist,

eine Krümmungsrate und einen Längsruck basierend auf jeweiligen Kostenfunktionen zu schätzen, die von den kinematischen Parametern und den Umgebungsparametern des Fahrzeugs (10) abhängen, und

eine geplante Trajektorie (19) des Fahrzeugs (10) basierend auf der Krümmungsrate und dem Längsruck zu schätzen,

wobei

die geschätzte Krümmungsrate und der geschätzte Längsruck jeweils einen Stabilisierungsbeitrag und einen Gleichgewichtsbeitrag umfassen, die von den jeweiligen Kostenfunktionen abhängen,

die geschätzte Krümmungsrate $K_i$ gegeben ist durch:

$$K_i = K_{stab,i} + K_{eq,i} \, , wobei \, K_{eq,i} = f_k(C_{k,eq,i})$$

wobei $K_{stab,i}$ der Stabilisierungsbeitrag der Krümmungsrate ist, $K_{eq,i}$ der Gleichgewichtsbeitrag der Krümmungsrate ist, $f_k$ eine Verstärkungsfunktion für die Krümmungsrate ist und $C_{k,eq,i}$ Gleichgewichtskosten für die Krümmungsrate bezeichnet, die als $C_{k,eq,i} = -(C_{o,i} + C_{h,i} + C_{c,i})$ definiert sind, und

wobei $K_{stab,i}$ definiert ist als

$$K_{stab,i} = \frac{C_{k,eq,i} - (\frac{d}{dt}C_{o,i} + \frac{d}{dt}C_{h,i})}{dC_{c,i}/dC_i}$$

wobei $C_{o,i}$ eine Queroffset-Kostenfunktion ist, $C_{h,i}$ eine Vorwärts-Kostenfunktion ist, $C_{c,i}$ eine Krümmungs-Kostenfunktion ist und $dC_{c,i}/dC_i$ eine Änderung von Krümmungskosten pro Krümmung ist,

der geschätzte Längsruck $j_i$ gegeben ist durch:

$$j_i = j_{stab,i} + j_{eq,i} \, wobei \, j_{eq,i} = f_j(C_{j,eq,i})$$

wobei $j_{stab,i}$ der Stabilisierungsbeitrag des Längsrucks ist, $j_{eq,i}$ der Gleichgewichtsbeitrag des Längsrucks ist, f eine Verstärkungsfunktion für den Längsruck ist und $C_{j,eq,i}$ Gleichgewichtskosten für den Längsruck bezeichnet, die als $C_{j,eq,i} = -(C_{r,i} + C_{rr,i} + C_{a,i})$ definiert sind, und

wobei $j_{stab,i}$ definiert ist als

$$j_{stab,i} = \frac{C_{j,eq,i} - (\frac{d}{dt}C_{r,i} + \frac{d}{dt}C_{rr,i})}{dC_{a,i}/dA_i}$$

wobei $C_{r,i}$ die Entfernungs-Kostenfunktion ist, $C_{rr,i}$ die Entfernungsraten-Kostenfunktion ist, $C_{a,i}$ die Beschleunigungs-Kostenfunktion ist und $dC_{a,i}/dA_i$ eine Änderung von Beschleunigungskosten pro Beschleunigung ist und

$i$ eine Nummer eines jeweiligen Zeitinkrements ist.

7. Nicht-flüchtiges computerlesbares Medium, das Anweisungen zum Ausführen des computerimplementierten Verfahrens nach mindestens einem der Ansprüche 1 bis 5 umfasst.

**Revendications**

1. Procédé mis en œuvre par ordinateur pour planifier la trajectoire d'un véhicule (10), le procédé consistant à :

   détecter des paramètres cinématiques du véhicule (10) à l'aide d'au moins un capteur d'état de véhicule (13),
   détecter des paramètres environnementaux du véhicule (10) à l'aide d'au moins un capteur d'environnement (15),
   estimer, via une unité de traitement (17), un taux de courbure et un à-coup longitudinal sur la base de fonctions de coût respectives dépendant des paramètres cinématiques et des paramètres environnementaux du véhicule (10), et
   estimer, via l'unité de traitement (17), une trajectoire planifiée (19) du véhicule (10) sur la base du taux de courbure et de l'à-coup longitudinal, dans lequel
   le taux de courbure estimé et l'à-coup longitudinal estimé comprennent chacun une contribution stabilisatrice et une contribution d'équilibre qui dépendent des fonctions de coût respectives,
   le taux de courbure estimé $K_i$ étant donné par :

   $$K_i = K_{stab,i} + K_{eq,i}, \text{ où } K_{eq,i} = f_k(C_{k,eq,i})$$

   où $K_{stab,i}$ est la contribution stabilisatrice du taux de courbure, $K_{eq,i}$ est la contribution d'équilibre du taux de courbure, $f_k$ est une fonction de gain pour le taux de courbure, et $C_{k,eq,i}$ désigne un coût d'équilibre pour le taux de courbure, défini comme $C_{k,eq,i} = -(C_{o,i} + C_{h,i} + C_{c,i})$, et
   où $K_{stab,i}$ est défini comme

   $$K_{stab,i} = \frac{C_{k,eq,i} - \left(\frac{d}{dt}C_{o,i} + \frac{d}{dt}C_{h,i}\right)}{dC_{c,i}\big/dC_i}$$

   où $C_{o,i}$ est une fonction de coût de décalage latéral, $C_{h,i}$ est une fonction de coût de cap, $C_{c,i}$ est une fonction de coût de courbure, et $dC_{c,i}\big/dC_i$ est un changement de coût de courbure par courbure,
   l'à-coup longitudinal estimé $j_i$ étant donné par :

   $$j_i = j_{stab,i} + j_{eq,i}, \text{ où } j_{eq,i} = f_j(C_{j,eq,i})$$

   où $j_{stab,i}$ est la contribution stabilisatrice de l'à-coup longitudinal, $j_{eq,i}$ est la contribution d'équilibre de l'à-coup longitudinal, f est une fonction de gain pour l'à-coup longitudinal et $C_{j,eq,i}$ désigne un coût d'équilibre pour l'à-coup longitudinal, défini comme $C_{j,eq,i} = -(C_{r,i} + C_{rr,i} + C_{a,i})$ et
   où $j_{stab,i}$ est défini comme

   $$j_{stab,i} = \frac{C_{j,eq,i} - \left(\frac{d}{dt}C_{r,i} + \frac{d}{dt}C_{rr,i}\right)}{dC_{a,i}\big/dA_i}$$

   où $C_{r,i}$ est une fonction de coût de portée, $C_{rr,i}$ est une fonction de coût de taux de portée, $C_{a,i}$ est une fonction de coût d'accélération, et $dC_{a,i}\big/dA_i$ est un changement de coût d'accélération par accélération, et
   i indique un numéro d'un incrément de temps respectif.

2. Procédé selon la revendication 1,

   dans lequel les fonctions de coût d'équilibre respectives sont lissées par rapport à l'incrément de temps après estimation de la trajectoire planifiée (19),

un taux de courbure révisé et un à-coup longitudinal révisé sont estimés sur la base des fonctions de coût d'équilibre lissées, et

une trajectoire planifiée révisée (19) est estimée sur la base du taux de courbure révisé et de l'à-coup longitudinal révisé.

3. Procédé selon l'une quelconque des revendications 1 à 2, dans lequel

le coût lié à la dynamique latérale du véhicule (10) est estimé sur la base d'un sous-ensemble des paramètres cinématiques et des paramètres environnementaux du véhicule (10), et

le coût lié à la dynamique latérale est transformé afin de déterminer la fonction de coût de taux de courbure, la fonction de coût de décalage latéral, la fonction de coût de cap et la fonction de coût de courbure.

4. Procédé selon l'une quelconque des revendications 1 à 3, dans lequel

le coût lié à la dynamique longitudinale du véhicule (10) est estimé sur la base d'un sous-ensemble des paramètres cinématiques et des paramètres environnementaux du véhicule (10),

le coût lié à la dynamique longitudinale est transformé afin de déterminer la fonction de coût d'à-coup longitudinal, la fonction de coût de portée, la fonction de coût de taux de portée et la fonction de coût d'accélération.

5. Procédé selon l'une quelconque des revendications 1 à 4, dans lequel

l'estimation de la trajectoire planifiée (19) du véhicule (10) est en outre basée sur une courbe de référence (51) qui est déterminée sur la base d'un tracé d'une voie (45) dérivé des paramètres environnementaux.

6. Dispositif (11) pour planifier une trajectoire d'un véhicule (10), le dispositif (11) comprenant :

au moins un capteur d'état du véhicule (13) configuré pour détecter des paramètres cinématiques du véhicule,

au moins un capteur d'environnement (15) configuré pour détecter des paramètres environnementaux du véhicule, et

une unité de traitement (17) configurée pour

estimer un taux de courbure et un à-coup longitudinal sur la base de fonctions de coût respectives dépendant des paramètres cinématiques et des paramètres environnementaux du véhicule (10), et

estimer une trajectoire planifiée (19) du véhicule (10) sur la base du taux de courbure et de l'à-coup longitudinal, dans lequel

le taux de courbure estimé et l'à-coup longitudinal estimé comprennent chacun une contribution stabilisatrice et une contribution d'équilibre qui dépendent des fonctions de coût respectives,

le taux de courbure estimé $K_i$ étant donné par :

$$K_i = K_{stab,i} + K_{eq,i}, \text{ où } K_{eq,i} = f_k(C_{k,eq,i})$$

où $K_{stab,i}$ est la contribution stabilisatrice du taux de courbure, $K_{eq,i}$ est la contribution d'équilibre du taux de courbure, $f_k$ est une fonction de gain pour le taux de courbure, et $C_{k,eq,i}$ désigne un coût d'équilibre pour le taux de courbure, défini comme $C_{k,eq,i} = -(C_{o,i} + C_{h,i} + C_{c,i})$, et

où $K_{stab,i}$ est défini comme

$$K_{stab,i} = \frac{C_{k,eq,i} - \left( \frac{d}{dt} C_{o,i} + \frac{d}{dt} C_{h,i} \right)}{dC_{c,i} \Big/ dC_i}$$

où $C_{o,i}$ est une fonction de coût de décalage latéral, $C_{h,i}$ est une fonction de coût de cap, $C_{c,i}$ est une fonction de coût de courbure, et $dC_{c,i} \Big/ dC_i$ est un changement de coût de courbure par courbure,

l'à-coup longitudinal estimé $j_i$ étant donné par :

$$j_i = j_{stab,i} + j_{eq,i}, \text{ où } j_{eq,i} = f_j(C_{j,eq,i})$$

où $j_{stab,i}$ est la contribution stabilisatrice de l'à-coup longitudinal, $j_{eq,i}$ est la contribution d'équilibre de l'à-coup longitudinal, $f_j$ st une fonction de gain pour l'à-coup longitudinal et $C_{j,eq,i}$ désigne un coût d'équilibre pour l'à-coup longitudinal, défini comme $C_{j,eq,i} = -(C_{r,i} + C_{rr,i} + C_{a,i})$ et

où $j_{stab,i}$ est défini comme

$$j_{stab,i} = \frac{C_{j,eq,i} - \left(\frac{d}{dt}C_{r,i} + \frac{d}{dt}C_{rr,i}\right)}{dC_{a,i}/dA_i}$$

où $C_{r,i}$ est une fonction de coût de portée, $C_{rr,i}$ est une fonction de coût de taux de portée, $C_{a,i}$ est une fonction de coût d'accélération, et $dC_{a,i}/dA_i$ est un changement de coût d'accélération par accélération, et

i indique un numéro d'un incrément de temps respectif.

7. Support non transitoire lisible par ordinateur comprenant des instructions pour exécuter le procédé mis en œuvre par ordinateur selon au moins l'une des revendications 1 à 5.

Fig. 1

Fig. 2

Fig. 3

Fig. 4

Fig. 4A

Fig. 4B

Fig. 4C

**EP 4 056 441 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20160050441 A

**Non-patent literature cited in the description**

- Optimal Trajectory Generation for Autonomous Vehicles Under Centripetal Acceleration Constraints for In-lane Driving Scenarios. **Y. ZHANG et al.** 2019 IEEE Intelligent Transportation Systems Conference (ITSC). IEEE, 27 October 2019, 3619-3626